# DEMANDE DE BREVET EUROPEEN

(11) **EP 4 778 743 A1**
(43) Date de publication de la demande: **22.07.2026**
(21) Numéro de dépôt: 26153004.2
(22) Date de dépôt: 20.01.2026
(51) Int. Cl.: B60G 15/06

(54) **PALIER DE BUTÉE DE SUSPENSION DE VÉHICULE AUTOMOBILE**

(30) Priorité: 20.01.2025 FR 2500574
(71) Demandeur: NTN Europe, 74000 Annecy (FR)
(72) Inventeur: MICHEL, Fabrice, 74600 Annecy (FR); NOUVEAU, Johan, 74370 Argonay (FR)
(74) Mandataire: Sayettat, Julien Christian

(57) **Abrégé**

L'invention concerne une butée de suspension comprenant deux coupelles (2, 4) formant entre elles une interface (5) de rotation relative desdites coupelles autour d'un axe, la coupelle inférieure (4) comprenant un support (8) présentant une paroi inférieure (9) sur laquelle un élément (10) de filtration est disposé, ledit élément de filtration comprenant une paroi supérieure (11) en contact glissant sur la paroi inférieure (9) et une paroi inférieure (12) sur laquelle un ressort (1) de suspension est destiné à venir en appui, ledit support étant réalisé à base d'un matériau thermoplastique et ledit élément de filtration étant réalisé à base d'un matériau élastomère, le matériau formant le support (8) intégrant un additif apte à augmenter le coefficient de glissement relatif de la paroi supérieure (11) sur le matériau thermoplastique formant la paroi inférieure (9).

## Description

L'invention concerne une butée de suspension de véhicule automobile, notamment destinée à être intégrée dans une jambe de suspension télescopique d'une roue directrice de véhicule automobile, ainsi qu'une jambe de suspension de véhicule automobile comprenant une telle butée.

L'invention s'applique notamment à une butée de suspension comprenant une coupelle supérieure fixe destinée à être associée à la caisse du véhicule et une coupelle inférieure tournante comportant un appui pour le ressort de suspension, lesdites coupelles formant entre elles une interface de rotation relative autour d'un axe.

On connait des butées dont la coupelle inférieure comprend un support, notamment réalisé à base d'un matériau thermoplastique, qui présente une paroi inférieure sur laquelle est disposé un élément de filtration, notamment réalisé à base d'un matériau élastomère, ledit élément de filtration formant l'appui pour le ressort de suspension.

En particulier, dans ce type de butée, l'élément de filtration comprend une paroi supérieure qui est disposée en contact glissant sur la paroi inférieure du support, ainsi qu'une paroi inférieure sur laquelle le ressort de suspension est destiné à venir en appui.

Lorsque le ressort de suspension est sollicité en compression et en détente, l'enroulement des spires de ce dernier sur elles-mêmes est modifié, ce qui entraîne la rotation de la coupelle inférieure. En outre, le braquage des roues induit également une rotation de la coupelle inférieure.

Toutefois, le transfert du couple de rotation entre le ressort et l'élément de filtration induit des micro-déplacements à leur interface, qui sont sources de bruits lors du fonctionnement de la butée.

Pour tenter de résoudre ce problème, il est connu d'appliquer un lubrifiant entre le ressort et la coupelle inférieure, mais cette solution ne donne pas satisfaction, en ce qu'elle génère des glissements trop importants qui impactent négativement le fonctionnement de la butée, tant au niveau de sa rotation que de la filtration des appuis du ressort.

L'invention vise à perfectionner l'art antérieur en proposant notamment une butée de suspension dans laquelle les bruits générés à l'interface entre le ressort et l'élément de filtration sont réduits, tout en garantissant un bon fonctionnement de ladite butée.

A cet effet, selon un premier aspect, l'invention propose une butée de suspension de véhicule automobile, ladite butée comprenant une coupelle supérieure et une coupelle inférieure formant entre elles une interface de rotation relative desdites coupelles autour d'un axe, ladite coupelle inférieure comprenant un support présentant une paroi inférieure sur laquelle un élément de filtration est disposé, ledit élément de filtration comprenant une paroi supérieure en contact glissant sur la paroi inférieure du support et une paroi inférieure sur laquelle un ressort de suspension est destiné à venir en appui, ledit support étant réalisé à base d'un matériau thermoplastique et ledit élément de filtration étant réalisé à base d'un matériau élastomère, le matériau thermoplastique formant le support intégrant un additif qui est apte à augmenter le coefficient de glissement relatif de la paroi supérieure de l'élément de filtration sur le matériau thermoplastique formant la paroi inférieure du support.

Selon un second aspect, l'invention propose une jambe de suspension de véhicule automobile comprenant une telle butée de suspension et un ressort de suspension ayant une spire supérieure en appui sur la paroi inférieure de l'élément de filtration.

D'autres particularités et avantages de l'invention apparaîtront dans la description qui suit, faite en référence aux figures jointes, dans lesquelles :
[Fig.1] représente en coupe axiale partielle de l'extrémité supérieure d'une jambe de suspension selon l'invention,
[Fig.1a] étant un agrandissement du côté gauche de la figure 1 centré sur l'appui du ressort sur l'élément de filtration de la coupelle inférieure ;
[Fig.2] représente, sous forme d'un diagramme à barres horizontales, les niveaux de bruit perçus avec différentes configurations entre le ressort et la coupelle inférieure.

En relation avec ces figures, on décrit ci-dessous une butée de suspension, notamment destinée à être intégrée dans une jambe de suspension d'un véhicule automobile, par exemple une jambe télescopique d'une roue directrice dudit véhicule automobile.

Une jambe de suspension comprend classiquement un amortisseur, un ressort 1 de suspension, ainsi qu'une butée de suspension sur laquelle le ressort 1 vient en appui, une roue du véhicule automobile étant montée sur le châssis par l'intermédiaire d'une telle jambe qui permet la suspension de la caisse relativement au sol.

La butée de suspension comprend une coupelle supérieure fixe 2 destinée à être associée à la caisse du véhicule, notamment via un bloc filtrant 3, et une coupelle inférieure tournante 4, lesdites coupelles formant entre elles une interface 5 de rotation relative autour d'un axe A.

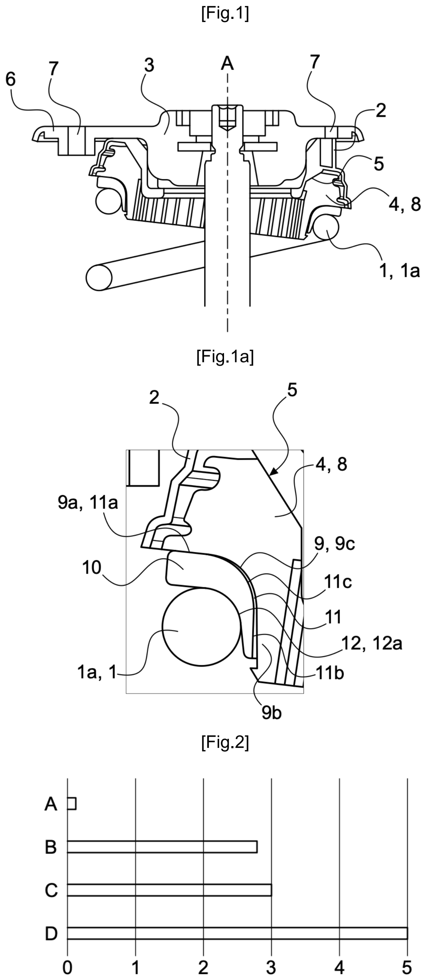

Dans cette description, les termes de positionnement dans l'espace sont pris en référence à l'axe A de rotation de la butée de suspension (tel que représenté sur la figure 1). En particulier :
- les termes « intérieur » et « extérieur » sont relatifs à une disposition respectivement proche et à distance de cet axe A ;
- les termes « axial » et « radial » sont relatifs à une disposition respectivement suivant cet axe A et s'éloignant ou se rapprochant de lui.

Par ailleurs, les termes « supérieur » ou « dessus » et « inférieur » ou « dessous » sont relatifs à la disposition de la butée telle que représentée sur les figures 1 et 1a.

Pour permettre son association à la caisse d'un véhicule automobile, le bloc filtrant 3 comprend une couronne 6 périphérique qui est pourvue d'orifices 7 de fixation à ladite caisse, par exemple par vissage.

Dans le mode de réalisation représenté, les coupelles 2, 4 sont montées en rotation relative de façon lisse. En particulier, une rondelle de friction peut être disposée dans l'interface 5 de rotation des coupelles 2, 4.

En variante, l'interface 5 de rotation peut comprendre des corps roulants qui sont disposés entre les coupelles 2, 4 afin de permettre leur rotation relative autour de l'axe A. Pour ce faire, les coupelles supérieure 2 et inférieure 4 peuvent comprendre chacune une rondelle, notamment réalisée en tôle emboutie, formant entre elles l'interface 5 de rotation, chacune desdites rondelles étant pourvue d'une piste de roulement respectivement inférieure et supérieure entre lesquelles les corps roulants sont disposés.

La coupelle inférieure 4 comprend un support 8 qui présente une paroi inférieure 9 d'appui pour le ressort 1 de suspension. En particulier, comme représenté sur la figure 1a, le ressort 1 comprend une spire supérieure 1a qui est en appui axial sur la paroi inférieure 9 par l'intermédiaire d'un élément 10 de filtration.

Ainsi, lorsque le ressort 1 est sollicité en compression et en détente, l'enroulement des spires 1a de ce dernier sur elles-mêmes est modifié, ce qui entraîne la rotation de la coupelle inférieure 4. En outre, le braquage des roues induit également une rotation de la coupelle inférieure 4.

Les coupelles 2, 4 permettent notamment une reprise des efforts du ressort 1 et éventuellement de ceux de la butée de choc. A cet effet, les coupelles 2, 4, et notamment le support 8 de la coupelle inférieure 4, sont réalisés en un matériau suffisamment rigide, notamment en matériau thermoplastique, par exemple de type polyamide, de préférence le polyamide 6.6, éventuellement chargé fibres de verre.

De façon avantageuse, le support 8 peut être réalisé par moulage, notamment par injection, et plus particulièrement en matériau thermoplastique tel que décrit précédemment. Cet agencement permet d'en faciliter la fabrication, et ainsi de réduire les coûts globaux de production de la butée de suspension.

Pour filtrer les contraintes et les vibrations induits par l'appui axial du ressort 1, l'élément 10 de filtration est disposé sur la paroi inférieure 9 du support 8, le ressort 1 étant en appui sur ladite paroi inférieure par l'intermédiaire dudit élément de filtration.

Selon une réalisation, l'élément 10 de filtration est réalisé en un matériau plus souple que le matériau thermoplastique formant le support 8. Pour ce faire, l'élément 10 de filtration peut être réalisé en un matériau élastomère, notamment de type TPU ou TPE.

L'élément 10 de filtration comprend une paroi supérieure 11 en contact glissant sur la paroi inférieure 9 du support 8, ainsi qu'une paroi inférieure 12 sur laquelle la spire supérieure 1a du ressort 1 de suspension vient directement en appui.

En relation avec les figures 1 et 1a, la paroi inférieure 9 du support 8 et la paroi supérieure 11 de l'élément 10 de filtration présentent des géométries complémentaires, ce qui permet à ladite paroi supérieure d'épouser ladite paroi inférieure, et ainsi de faciliter le glissement relatif dudit élément de filtration et dudit support lors des rotations de la butée.

Ainsi, la paroi inférieure 9 du support 8 présente une portée annulaire supérieure 9a s'étendant suivant une dimension radiale et un manchon inférieur 9b sensiblement axial, ainsi qu'une portée intérieure courbe 9c de raccordement de ladite portée annulaire audit manchon.

De même, la paroi supérieure 11 de l'élément 10 de filtration présente une portée annulaire supérieure 11a s'étendant suivant une dimension radiale et un manchon inférieur 11b sensiblement axial, ainsi qu'une portée intérieure courbe 11c de raccordement de ladite portée annulaire audit manchon.

De façon avantageuse, la paroi inférieure 12 de l'élément 10 de filtration présente une géométrie similaire à celle des parois 9, 11, et notamment une paroi intermédiaire 12a courbe agencée pour épouser la forme extérieure de la spire supérieure 1a du ressort 1.

Le matériau thermoplastique formant le support 8 intègre un additif qui est apte à augmenter le coefficient de glissement relatif de la paroi supérieure 11 de l'élément 10 de filtration sur le matériau thermoplastique formant la paroi inférieure 9 du support 8.

La demanderesse a constaté que la présence d'une interface de glissement augmentée entre l'élément 10 de filtration et le support 8 permet de limiter les bruits générés par les frottements du ressort 1 sur ledit élément lors de la rotation de la butée, et ce tout en garantissant un frottement suffisant entre ledit ressort et ledit élément pour garantir un bon fonctionnement de ladite butée.

De façon avantageuse, l'additif est apte à augmenter le coefficient de glissement du matériau thermoplastique formant le support 8, et notamment la paroi inférieure 9, d'au moins 10%, et de préférence de 20 à 40%.

Selon une réalisation avantageuse, le matériau thermoplastique formant le support 8 intègre une quantité réduite d'additif, notamment comprise entre 0,5 et 2% du poids total dudit matériau, et de préférence de l'ordre de 1%.

Selon un mode de réalisation de l'invention, le matériau thermoplastique formant le support 8 est obtenu par mélange d'une quantité dudit matériau sans additif avec une quantité dudit matériau intégrant ledit additif.

En particulier, la quantité de matériau intégrant l'additif peut être inférieure à 10% du poids total du matériau formant le support 8, et de préférence de l'ordre de 5%.

L'additif peut comprendre un matériau secondaire, par exemple également thermoplastique, notamment à base de PTFE, dont le coefficient de friction est inférieur à celui du matériau thermoplastique formant principalement le support, notamment à base de polyamide.

En complément ou en tant qu'alternative, l'additif peut comprendre une charge minérale, de préférence choisie parmi le talc et le Disulfure de Molybdène (MoS₂).

Selon un mode de réalisation particulièrement avantageux, le matériau thermoplastique formant le support 8 comprend un mélange de matériau thermoplastique « brut » (sans additif), notamment à base de polyamide, avec environ 4% en poids de matériau thermoplastique de même type contenant un pourcentage en poids intrinsèque de 20% de Disulfure de Molybdène (MoS₂).

La figure 2 représente, sous forme d'un diagramme à barres horizontales, les niveaux de bruit perçus avec différentes configurations entre le ressort 1 et la coupelle inférieure 4, notamment :
- avec une interface à contact glissant augmenté entre l'élément 10 de filtration et le support 8, comme prévu par l'invention (diagramme A) ;
- avec une interface à contact glissant augmenté entre l'élément 10 de filtration et le ressort 1, comme connu de l'art antérieur (diagramme B) ;
- avec des interfaces « standard », c'est-à-dire sans ajout d'additif et/ou de lubrifiant pour diminuer le coefficient de friction, entre l'élément 10 de filtration et respectivement le ressort 1 et le support 8 (diagramme C) ; et
- avec une fixation entre l'élément 10 de filtration et le support 8 (diagramme D).

De façon préliminaire, on constate que la butée de suspension de contrôle présente un niveau de bruit relativement élevé (de l'ordre de 3), du fait des frottements du ressort 1 contre la paroi inférieure 12 de l'élément 10 de filtration (diagramme C).

Parmi les solutions proposées pour pallier ce problème, on constate que l'immobilisation de l'élément 10 de fixation sur le support 8 augmente le niveau de bruit (de l'ordre de 5), et n'est donc pas pertinent pour la réalisation d'une butée de suspension (diagramme D).

Par ailleurs, la formation d'un contact glissant au niveau de la zone effective de génération du bruit, c'est-à-dire entre le ressort 1 et l'élément 10 de filtration (diagramme B), ne permet d'obtenir qu'une très faible réduction du niveau de bruit de la butée de suspension (de l'ordre de 2,8) par rapport à la butée de contrôle (diagramme C), de sorte que cette solution ne permet pas de résoudre de façon satisfaisante le problème rencontré.

En revanche, comme représenté par le diagramme A, la formation d'un contact glissant à l'opposé de la zone de frottement du ressort 1 sur l'élément 10 de filtration, c'est-à-dire au niveau de l'interface dudit élément avec le support 8 de la coupelle inférieure 4, permet de réduire le niveau de bruit de la butée de suspension à un seuil quasi nul (0,1), et ce tout en conservant suffisamment de frottement au niveau du ressort 1 pour garantir le bon fonctionnement de ladite butée.

## Revendications

1. Butée de suspension de véhicule automobile, ladite butée comprenant une coupelle supérieure (2) et une coupelle inférieure (4) formant entre elles une interface (5) de rotation relative desdites coupelles autour d'un axe (A), ladite coupelle inférieure comprenant un support (8) présentant une paroi inférieure (9) sur laquelle un élément (10) de filtration est disposé, ledit élément de filtration comprenant une paroi supérieure (11) en contact glissant sur la paroi inférieure (9) du support (8) et une paroi inférieure (12) sur laquelle un ressort (1) de suspension est destiné à venir en appui, ledit support étant réalisé à base d'un matériau thermoplastique et ledit élément de filtration étant réalisé à base d'un matériau élastomère, ladite butée étant **caractérisée en ce que** le matériau thermoplastique formant le support (8) intègre un additif qui est apte à augmenter le coefficient de glissement relatif de la paroi supérieure (11) de l'élément (10) de filtration sur le matériau thermoplastique formant la paroi inférieure (9) du support (8).

2. Butée de suspension selon la revendication 1, **caractérisée en ce que** la paroi inférieure (9) du support (8) présente une portée annulaire (9a) s'étendant suivant une dimension radiale, et une portée intérieure courbe (9c) de raccordement de ladite portée radiale à un manchon (9b) dudit support.

3. Butée de suspension selon l'une des revendications 1 ou 2, **caractérisée en ce que** la paroi supérieure (11) de l'élément (10) de filtration présente une portée annulaire (11a) s'étendant suivant une dimension radiale, et une portée intérieure courbe (11c) de raccordement de ladite portée radiale à un manchon (11b) dudit élément de filtration.

4. Butée de suspension selon l'une quelconque des revendications 1 à 3, **caractérisée en ce que** l'additif comprend un matériau secondaire dont le coefficient de friction est inférieur à celui du matériau thermoplastique formant principalement le support (8).

5. Butée de suspension selon l'une quelconque des revendications 1 à 4, **caractérisée en ce que** l'additif comprend une charge minérale.

6. Butée de suspension selon la revendication 5, **caractérisée en ce que** l'additif est choisi parmi le talc et le Disulfure de Molybdène (MoS₂).

7. Butée de suspension selon l'une quelconque des revendications 1 à 6, **caractérisée en ce que** le matériau thermoplastique formant le support (8) intègre entre 0,5 et 2% en poids d'additif, notamment de l'ordre de 1%.

8. Butée de suspension selon l'une quelconque des revendications 1 à 7, **caractérisée en ce que** le matériau thermoplastique formant le support (8) est obtenue par mélange d'une quantité dudit matériau sans additif avec une quantité dudit matériau intégrant ledit additif.

9. Butée de suspension selon la revendication 8, **caractérisée en ce que** la quantité de matériau thermoplastique intégrant l'additif est inférieure à 10% en poids, notamment en étant de l'ordre de 5%.

10. Butée de suspension selon l'une quelconque des revendications 1 à 9, **caractérisée en ce que** le matériau thermoplastique formant le support (8) est chargé avec des fibres, notamment de verre.

11. Butée de suspension selon l'une quelconque des revendications 1 à 10, **caractérisée en ce que** le support (8) est obtenu par moulage par injection.

12. Butée de suspension selon l'une quelconque des revendications 1 à 11, **caractérisée en ce que** l'additif est apte à augmenter le coefficient de glissement du matériau thermoplastique d'au moins 10%, notamment de 20% à 40%.

13. Butée de suspension selon l'une quelconque des revendications 1 à 12, **caractérisé en ce que** l'élément (10) de filtration est réalisé à base d'un matériau élastomère de type TPU ou TPE.

14. Butée de suspension selon l'une quelconque des revendications 1 à 13, **caractérisée en ce que** le matériau thermoplastique formant le support (8) est de type polyamide.

15. Jambe de suspension de véhicule automobile comprenant une butée de suspension selon l'une quelconque des revendications 1 à 14 et un ressort (1) de suspension ayant une spire supérieure (1a) en appui sur la paroi inférieure (12) de l'élément (10) de filtration.
